# EUROPÄISCHE PATENTANMELDUNG

(11) **EP 3 667 198 A1**
(43) Veröffentlichungstag der Anmeldung: **17.06.2020**
(21) Anmeldenummer: 19207876.4
(22) Anmeldetag: 08.11.2019
(51) Int. Cl.: F24H 9/20, F23N 5/04, F23N 5/24

(54) **WASSERERHITZER MIT VERBESSERTER ÜBERWACHUNG**

(30) Priorität: 12.12.2018 PT 2018115207
(71) Anmelder: Bosch Termotecnologia S.A., 3800-533 Aveiro (PT)
(72) Erfinder: Oliveira, Nuno, 3850-577 Branca (PT); Santos, Samuel, 3800-003 Aveiro (PT); Guilherme, David Carvalho, 3810-376 Aveiro (PT); Laranjeira, Ricardo, 3800-855 Carregal, Aveiro (PT); Ribeiro, Bruno Armindo Rodrigues, 440-394 Vila nova de Gaia (PT); Marques, Rafael, 3850-587 Branca Alb (PT)
(74) Vertreter: Bee, Joachim

(57) **Zusammenfassung**

Die Erfindung betrifft einen Wassererhitzer (10) sowie ein Verfahren zum Betreiben eines Wassererhitzers (10), umfassend eine über einem Brenner (12) angeordnete Brennkammer (14), an deren oberer Mündung ein Wärmeübertrager (16) angeordnet ist, wobei die Brennkammer (14) durch eine Wandung (18) definiert ist, und wobei in der Wandung (18) eine Öffnung (40) ausgebildet ist, welche dazu vorgesehen ist ein sich stauendes Abgas aus der Brennkammer (14) herauszuführen. Es wird vorgeschlagen an der Öffnung (18) ein wärmeempfindliches Element (42) anzuordnen, welches dazu vorgesehen ist mit dem herausgeführten Abgas unmittelbar beaufschlagt zu werden.

## Beschreibung

Die vorliegende Erfindung betrifft einen Wassererhitzer, umfassend eine über einem Brenner angeordnete Brennkammer, an deren oberer Mündung ein Wärmeübertrager angeordnet ist, wobei die Brennkammer durch eine Wandung definiert ist, und wobei in der Wandung eine Öffnung ausgebildet ist, welche dazu vorgesehen ist ein sich stauendes Abgas aus der Brennkammer herauszuführen. Die Erfindung betrifft auch ein Verfahren zum Betreiben eines solchen Wassererhitzers.

### Stand der Technik

Das Dokument DE9205582U1 offenbart einen gasbeheizten Wassererhitzer, mit einer über einem Brenner angeordneten Brennkammer, an deren oberen Mündung ein Wärmeübertrager angeordnet ist, und mit einer Einrichtung zum Überwachen der Abgasströmung, die mit einem auf Temperaturerhöhungen bei Abgasstau in der Brennkammer reagierenden Temperaturfühler versehen ist. Der Temperaturfühler ist dabei in einem aus der Brennkammer nahe deren Unterkannte herausgeführten Abgaskanal angeordnet, der mindestens bis zur Ebene der Unterkante der Brennkammer nach unten geführt ist.

### Offenbarung der Erfindung

Der vorliegende Wassererhitzer mit den Merkmalen des Hauptanspruchs umfasst eine über einem Brenner angeordnete Brennkammer, an deren oberer Mündung ein Wärmeübertrager angeordnet ist, wobei die Brennkammer durch eine Wandung definiert ist, und wobei in der Wandung eine Öffnung ausgebildet ist, welche dazu vorgesehen ist ein sich stauendes Abgas aus der Brennkammer herauszuführen. Sie hat gegenüber dem aufgeführten Stand der Technik den Vorteil, dass an der Öffnung ein wärmeempfindliches Element angeordnet ist, welches dazu vorgesehen ist mit dem herausgeführten Abgas unmittelbar beaufschlagt zu werden. Dadurch kann eine effektivere Überwachung der Abgasströmung erfolgen.

Durch die in den Unteransprüchen aufgeführten Merkmale sind vorteilhafte Weiterbildungen der Erfindung nach dem Hauptanspruch möglich. So ist es von Vorteil, wenn es sich bei dem wärmeempfindlichen Element um einen Bimetallschalter handelt. Dadurch wird eine besonders effiziente Überwachung der Abgasströmung ermöglicht.

Vorteilhaft ist es auch, wenn an der Wandung ein Vorsprung ausgebildet ist, an dem das wärmeempfindliche Element angeordnet ist, wodurch ebenfalls eine effizientere Überwachung der Abgasströmung ermöglicht wird.

Die Erfindung betrifft auch Verfahren zum Betreiben eines Wassererhitzers, insbesondere eines Wassererhitzers nach der vorhergehenden Beschreibung, umfassend eine über einem Brenner angeordnete Brennkammer, an deren oberer Mündung ein Wärmeübertrager angeordnet ist, wobei die Brennkammer durch eine Wandung definiert ist, und wobei in der Wandung eine Öffnung ausgebildet ist, durch welche sich stauendes Abgas aus der Brennkammer herausgeführt wird. Das Verfahren hat den Vorteil, dass an der Öffnung ein wärmeempfindliches Element angeordnet ist, welches mit dem herausgeführten Abgas unmittelbar beaufschlagt wird, wodurch eine effektivere Überwachung der Abgasströmung erfolgen kann.

Es ist von Vorteil, wenn eine Sicherheitsmaßnahme, insbesondere ein Abschalten des Wassererhitzers, eingeleitet wird, wenn das herausgeführte Abgas eine Mindesttemperatur aufweist, wodurch die Sicherheit erhöht wird.

### Zeichnungen

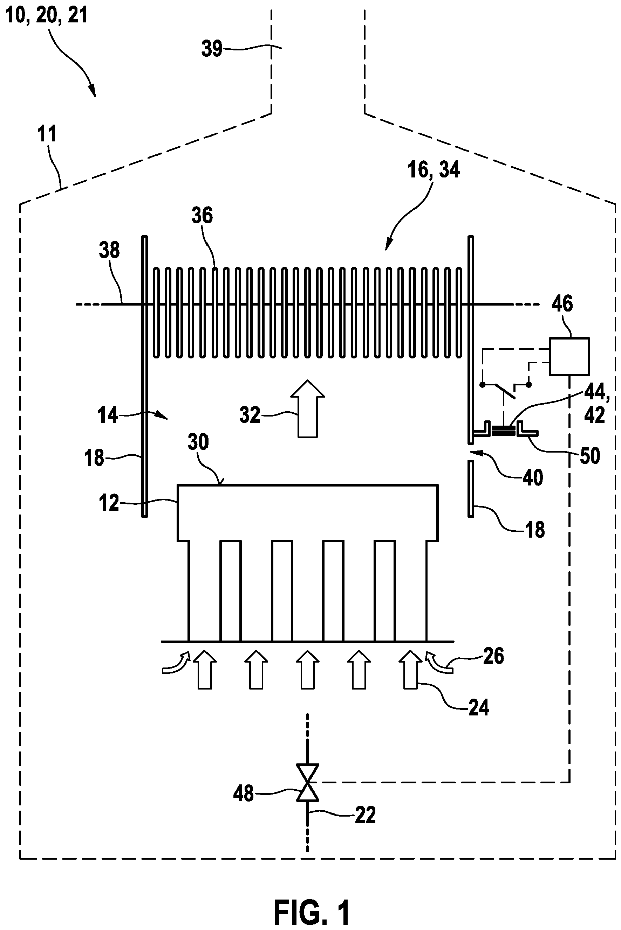

In den Zeichnungen ist ein Ausführungsbeispiel der Erfindung schematisch dargestellt und in der nachfolgenden Beschreibung näher erläutert. Es zeigt
- Fig. 1: eine schematische Darstellung eines erfindungsgemäßen Wassererhitzers.

### Beschreibung des Ausführungsbeispiels

In Fig. 1 ist eine schematische Darstellung eines erfindungsgemäßen Wassererhitzers 10 gezeigt. Der Wassererhitzer 10 weist ein Gehäuse 11 auf, in dem eine über einem Brenner 12 angeordnete Brennkammer 14 angeordnet ist, wobei die Brennkammer 14 durch eine Wandung 18 definiert, bzw. ausgebildet, ist. An einer oberen Mündung der Brennkammer 14 wiederum ist ein Wärmeübertrager 16 angeordnet.

Bei dem Wassererhitzer 10 handelt es sich um einen Durchlauferhitzer 20, im vorliegenden Fall einen gasbetriebenen Durchlauferhitzer 21. Er wird bei einem Heizvorgang derart betrieben, dass dem Brenner 12 über eine Zuführleitung 22 Gas 24 zugeführt wird. Bei der Zuführung des Gases 24 wird gleichzeitig Verbrennungsluft 26 angesaugt. Das Gas 24 und die Verbrennungsluft 26 passieren einzelne Mischkammern, wo sie zu einem im Wesentlichen homogenen Gas-Luft-Gemisch vermischt werden und anschließend an einer Brenneroberfläche 30 verbrannt werden. Das bei der Verbrennung entstehende heiße Abgas 32 steigt innerhalb der Brennkammer 14 auf und passiert dabei den Wärmeübertrager 16. Bei dem Wärmeübertrager 16 handelt es sich im vorliegenden Fall um einen Lamellenblock 34, dessen Lamellen 36 von einer Wasserleitung 38, welche zu erwärmendes Wasser transportiert, durchsetzt sind. Das heiße Abgas 32 strömt dabei zwischen den einzelnen Lamellen 36 des Lamellenblocks 34 hindurch, wobei Wärme vom heißen Abgas auf das zu erwärmende Wasser übertragen wird. Das erwärmte Wasser kann dann einem Verbraucher zur Verfügung gestellt werden. Das durch den Wärmetausch abgekühlte Abgas wiederum verlässt den Wassererhitzer 10 schließlich über eine Kaminvorrichtung 39.

Nun kann es durch die hohen Temperaturen des Abgases zur Oxidation des Lamellenmaterials, im vorliegenden Fall Kupfer, und zur Bildung von Kondensat an den Lamellen 36 kommen, was zur Verunreinigung des Lamellenblocks 36 führen kann. Dies wiederum kann den Abgasstrom durch den Lamellenblock einschränken oder gar verhindern, wodurch es zur Stauung von heißem Abgas in der Brennkammer 30 kommen kann. Dies wiederum kann aufgrund der hohen Temperaturen zur Schäden am Lamellenblock 36 und/oder der Wandung 18 der Brennkammer führen. Ach kann es dabei vorkommen, dass sich das stauende Abgas nach unten hin aus der Brennkammer 24 herausströmt und somit nicht nur an der Innenseite der Wandung 18, sondern auch an der Außenseite der Wandung 18, Schäden verursachen kann. Bekannte Wassererhitzer weisen daher, wie auch der vorliegende Wassererhitzer 10, eine Öffnung 40 in der Wandung 18 auf, durch welche ein sich stauendes Abgas aus der Brennkammer 14 für eine Überwachung herausgeführt werden kann. Allerdings weisen diese bekannten Wassererhitzter komplexere Vorrichtungen zum Abführen des gestauten Abgases auf. Dies hat den Nachteil, dass das Abgas über weite Strecken transportiert werden muss, wodurch es abkühlen und eine Überwachung verfälschen kann. Außerdem gestaltet sich dadurch eine Überwachung nur sehr träge.

Bei dem vorliegenden Wassererhitzer 10 ist nun an der Öffnung 40 ein wärmeempfindliches Element 42 angeordnet, welches dazu vorgesehen ist mit dem herausgeführten Abgas unmittelbar beaufschlagt zu werden. Dadurch wird eine genauere, schnellere und damit auch effizientere Überwachung des herausgeführten Abgases ermöglicht.

Im vorliegenden Fall handelt es sich bei dem wärmeempfindlichen Element 42 um einen Bimetallschalter 44. Durch den Bimetallschalter 44 wird es ermöglicht besonders schnell eine Sicherheitsmaßnahme einzuleiten, wenn das herausgeführte Abgas eine bestimmte Mindesttemperatur aufweist.

Das wärmeempfindliche Element 42 ist im gezeigten Fall an einem Vorsprung 50 angeordnet, welcher an der Wandung 18 ausgebildet ist. Dadurch kann durch die Öffnung 40 herausströmendes Abgas nach oben hin leicht gestaut werden, wodurch der Wärmeübertrag auf das wärmeempfindliche Element 42, bzw. im vorliegenden Fall auf den Bimetallschalter 44, verbessert werden kann und eine genauere und effizientere Überwachung erfolgen kann. Zudem wird dadurch eine leichtere Überprüfung und/oder Auswechslung des wärmeempfindlichen Elements 42 bei einer Wartung ermöglicht.

Im vorliegenden Fall ist das wärmeempfindliche Element 42, bzw. der Bimetallschalter 44, mit einer Regeleinheit 46 elektrisch verbunden, die wiederum mit einem Gasventil 48, zur Steuerung der Gaszufuhr in der Zuführleitung 22, elektrisch verbunden ist. Der Wassererhitzer wird nun so betrieben, dass im Falle einer Beaufschlagung des wärmeempfindlichen Elements 42, bzw. des Bimetallschalters 44, eine Sicherheitsmaßnahme, im vorliegenden Fall ein Abschalten des Wassererhitzers 10, eingeleitet wird, wenn das herausgeführte Abgas eine Mindesttemperatur aufweist. Das Abschalten des Wassererhitzers erfolgt dabei derart, dass das wärmeempfindliche Element 42, in diesem Fall der Bimetallschalter 44, bei einer Mindesttemperatur des herausgeführten Abgases einen Stromkreis schließt. Dies wird durch die Regeleinheit 46 erkannt, woraufhin diese das Gasventil 48 und damit auch die Gaszufuhr zum Brenner 12 schließt. Dadurch kann eine besonders schnelle und effiziente Abschaltung erfolgen, wodurch wiederum die Sicherheit erhöht wird.

## Patentansprüche

1. Wassererhitzer (10), umfassend eine über einem Brenner (12) angeordnete Brennkammer (14), an deren oberer Mündung ein Wärmeübertrager (16) angeordnet ist, wobei die Brennkammer (14) durch eine Wandung (18) definiert ist, und wobei in der Wandung (18) eine Öffnung (40) ausgebildet ist, welche dazu vorgesehen ist ein sich stauendes Abgas aus der Brennkammer (14) herauszuführen, **dadurch gekennzeichnet, dass** an der Öffnung (40) ein wärmeempfindliches Element (42) angeordnet ist, welches dazu vorgesehen ist mit dem herausgeführten Abgas unmittelbar beaufschlagt zu werden.

2. Wassererhitzer (10) nach Anspruch 1, **dadurch gekennzeichnet, dass** es sich bei dem wärmeempfindlichen Element (42) um einen Bimetallschalter (44) handelt.

3. Wassererhitzer (10) nach einem der Ansprüche 1 oder 2, **dadurch gekennzeichnet, dass** an der Wandung (40) ein Vorsprung (50) ausgebildet ist, an dem das wärmeempfindliche Element (42) angeordnet ist.

4. Verfahren zum Betreiben eines Wassererhitzers (10), insbesondere eines Wassererhitzers (10) nach einem der vorhergehenden Ansprüche, umfassend eine über einem Brenner (12) angeordnete Brennkammer (14), an deren oberer Mündung ein Wärmeübertrager (16) angeordnet ist, wobei die Brennkammer (14) durch eine Wandung (18) definiert ist, und wobei in der Wandung (18) eine Öffnung (40) ausgebildet ist, durch welche ein sich stauendes Abgas aus der Brennkammer (14) herausgeführt wird, **dadurch gekennzeichnet, dass** an der Öffnung (18) ein wärmeempfindliches Element (42) angeordnet ist, welches mit dem herausgeführten Abgas unmittelbar beaufschlagt wird.

5. Verfahren nach Anspruch 4, **dadurch gekennzeichnet, dass** eine Sicherheitsmaßnahme, insbesondere ein Abschalten des Wassererhitzers (10), eingeleitet wird, wenn das herausgeführte Abgas eine Mindesttemperatur aufweist.
